# EUROPÄISCHE PATENTANMELDUNG

(11) **EP 0 826 432 A2**
(43) Veröffentlichungstag der Anmeldung: **04.03.1998**
(21) Anmeldenummer: 97114234.4
(22) Anmeldetag: 18.08.1997
(51) Int. Cl.: B05D 5/00, C04B 38/00, H01L 31/18

(54) **Verfahren zur Herstellung von hochporösen Schichten**

(30) Priorität: 02.09.1996 DE 19635556
(71) Anmelder: FORSCHUNGSZENTRUM JÜLICH GMBH, 52425 Jülich (DE)
(72) Erfinder: Busenbender, Ilona, 52064 Mainz (DE)

(57) **Zusammenfassung**

Die Erfindung bezieht sich auf ein Verfahren zur Herstellung poröser Schichten auf einem Substrat.
Eine aus Flüssigkeit und Partikeln hergestellte Paste wird auf einem Substrat aufgebracht und in dampfförmiger Atmosphäre vorzugsweise wenigstens 30 Minuten pro 10 µm Schichtdicke getrocknet. Der Dampf wird dabei durch die in der Paste verwendeten Flüssigkeit gebildet. Anschließend wird die auf dem Substrat befindliche Paste gesintert.
Je länger der Trocknungsvorgang dauerte, desto größer war die Porosität der so hergestellten Schichten.

## Beschreibung

Die Erfindung bezieht sich auf ein Verfahren zur Herstellung von porösen Schichten auf einem Substrat.

Hochporöse Schichten werden beispielsweise bei photoelektrochemischen oder farbstoffsensibilisierten Solarzellen benötigt. Diese bestehen aus einem elektrisch leitfähigen Substrat mit einer hierauf aufgebrachten Halbleiterschicht. Auf der Halbleiterschicht wird ein Farbstoff adsorbiert. Nach Anregung des Farbstoffes durch ein Photon kann dieser bei geeignet gewählten Eigenschaften - im allgemeinen ein Übergangsmetallkomplex - ein Elektron auf den Halbleiter übertragen. Das im Inneren des Halbleiters herrschende elektrische Feld sorgt für die Fortleitung des Elektrons. Die auf dem Farbstoff zurückgebliebene positive Ladung wird auf einen Redoxmediator übertragen, der sich in der die Zelle ausfüllenden Lösung befindet, und von diesem an die Gegenelektrode weitergegeben. Mit dem letzten Elektronentransfer wird der Redoxmediator in den reduzierten Zustand zurückversetzt und der elektrische Stromkreis geschlossen.

Es ist aus der Druckschrift 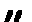 B. O'Regan et al., Letters of nature, Vol. 353, Seiten 737-740, (1991) bekannt, die Halbleiterschicht durch Aufrakeln einer wäßrigen Paste aus Titandioxid bestimmter Partikelgröße (Degussa, P 25) und Struktur (30% Rutil, 70% Anatas), d. h. durch Durchdrücken der Paste durch eine Maske mit einem Schieber auf ein Substrat mittels Siebdruckverfahren oder Sol-Gel-Prozeß herzustellen. Die aufgerakelte Paste wird zunächst bei Raumtemperatur an Luft ca. 1 Minute lang getrocknet und dann zwischen 450 und 550 °C ca. 15 Minuten lang gesintert.

Die Halbleiterschicht einer farbstoffsensibilisierten Solarzelle sollte eine große Oberfläche besitzen, um möglichst vielen Photonen gleichzeitig die Chance zu geben, ein Farbstoffmolekül anzuregen. Sie sollte eine gute Haftung auf der leitenden Beschichtung aufweisen, um einen einwandfreien elektrischen Kontakt zu gewährleisten. Sie sollte ein großes Adsorptionsvermögen ausweisen und aus einer kristallinen Struktur bestehen. Weiterhin sollte sie möglichst lichtdurchlässig und porös sein.

Durch das Trocknen der gerakelten Paste an der Luft bei Raumtemperatur und Umgebungsfeuchte vor dem Sintern ergibt sich eine gleichmäßige, relativ glatte Oberfläche, deren Rauhigkeit durch die Variation der Größe der Titandioxidpartikel in der Paste bestimmt werden kann. Nach diesem Verfahren hergestellte Titandioxidschichten weisen nachteilhaft eine verhältnismäßig geringe Porosität auf.

Aus der Druckschrift US 4 874 414 ist ein Verfahren bekannt, gemäß dem eine aus einer Flüssigkeit und Partikeln, nämlich aus Kaolin und Wasser hergestellte Paste auf ein Substrat aufgebracht, an der Luft getrocknet und anschließend gesintert wird.

Aufgabe der Erfindung ist die Schaffung eines Herstellungsverfahrens für hochporöse Schichten mit verbesserter Porosität im Vergleich zum vorgenannten Stand der Technik.

Die Aufgabe wird durch ein Verfahren mit den Merkmalen des Hauptanspruchs gelöst. Vorteilhafte Ausgestaltungen ergeben sich aus den rückbezogenen Ansprüchen.

Unter Paste wird eine streichbare Masse verstanden. Diese besteht aus Partikeln und aus einer Flüssigkeit.

Die Partikel der Paste bestehen aus dem Stoff, aus dem die herzustellende poröse Schicht bestehen soll. Also werden z. B. zur Herstellung einer porösen, aus Titandioxid bestehenden Schicht aus Titandioxid bestehende Partikel eingesetzt. Grundsätzlich sind alle Metallverbindungen geeignet. Zu bevorzugen sind jedoch Verbindungen, die eine Rutilstruktur, wie z. B. die Oxide ZrO₂, VO₂, NbO₂, CrO₂, MoO₂, WO₂, MnO₂, RuO₂, OsO₂, IrO₂, GeO₂, SnO₂, PbO₂, TeO₂ die Fluoride MnF₂, FeF₂, CoF₂, NiF₂, PdF₂, ZnF₂ und MgF₂ oder die eine Anatasstruktur ausbilden können. Der Durchmesser der Partikel beträgt vorzugsweise 0,1 - 1000 nm.

Als Flüssigkeit wird zur Herstellung der Paste vorzugsweise Wasser eingesetzt. Toluol, Benzol, Methanol, Ethanol, Säuren, Laugen, Aldehyde, Ketone, Ether, Alkane, Alkene, Alkine, Amine, Amide, Alkohole, Aromaten, (Hetero-)cyclische Verbindungen sind ebenfalls geeignet.

Die Aufbringung der Paste auf dem Substrat erfolgt beispielsweise durch Aufrakeln.

Geeignete Substrate bestehen vorzugsweise aus Materialien, die kein Wasser absorbieren und die eine glatte Oberfläche aufweisen. Glas, SnO₂:F auf Glas oder Metall sind daher geeignet.

Unter Dampf ist ein Gas zu verstehen, das nicht allzu weit vom Zustand der Sättigung, also vom Verflüssigungsbereich entfernt ist. Ein Dampf im Sinne der Erfindung liegt vor, wenn ein Trocknungsvorgang bei vorgegebener Trocknungstemperatur aufgrund des herrschenden Umgebungsdampfes 10 Minuten und länger pro 10 µm Schichtdicke dauert.

Die Angabe bezüglich der Schichtdicke bezieht sich auf die poröse Schicht nach Sinterung. Beträgt die Schichtdicke nach Sinterung z. B. 20 µm, so beträgt die durch den Sättigungsgrad des Dampfes gesteuerte Trocknungszeit wenigstens 20 Minuten. Die Porosität steigt mit zunehmender Zeit, die für den Trocknungsvorgang benötigt wird. In einer verbesserten Ausführungsform beträgt daher die Trocknungszeit wenigstens 30 Minuten - vorzugsweise 2 Stunden - pro 10 µm Schichtdicke.

Eine aus 2 g TiO₂ und 2 g Carbowax (Polyethylenglycol, M=20000 g/mol) und 10 ml Wasser bestehende Paste wurde auf verschiedenen, eine glatte Oberfläche aufweisenden Substraten, nämlich auf Glas sowie auf Metall, aufgerakelt. Bei hoher relativer Luftfeuchtigkeit nahe der Sättigungsgrenze wurde bei Temperaturen zwischen 10-59 °C bis zu 200 Stunden lang getrocknet. Anschließend wurde in Luft für 15 min bei 500 °C gesintert.

Es wurde verfahrensgemäß im Gegensatz zum Trocknen an Luft bei Raumtemperatur und Umgebungsfeuchte, d.h. bei vergleichsweise geringer relativer Luftfeuchtigkeit, eine hochporöse Schicht mit rauher Oberfläche erhalten.

Durch Verkleinerung der Größe der Titandioxidpartikel in der Paste konnte die Rauhigkeit der Schicht noch weiter gesteigert werden. Gleiches galt für Pasten, die aus anderen Partikeln sowie mit anderen Flüssigkeiten hergestellt wurden. In allen Fällen erwies sich die Trocknung in einer dampfförmigen Atmosphäre nahe dem Sättigungszustand als vorteilhaft. Je größer die relative Feuchtigkeit war, desto poröser waren die verfahrensgemäß hergestellten Schichten.

Zur Paste wurde ferner handelsübliches TiO₂ und Wasser verarbeitet und hieraus verfahrensgemäß hochporöse Schichten hergestellt. Alternativ zu handelsüblichem TiO₂ wurde TiO₂ aus Titanisopropoxid und Wasser hergestellt und einem Druck von 40 bar bei 200 °C ausgesetzt. Die hieraus hergestellte TiO₂-Paste führte zu einer anderen Struktur im Vergleich zum vorgenannten Produkt.

Die hergestellten hochporösen Schichten können als Katalysator oder als Substrat für Katalysatoren fungieren. Ferner können diese für die (Dünnschicht-) Chromatographie verwendet werden.

## Patentansprüche

1. Verfahren zur Herstellung poröser Schichten auf einem Substrat mit den Schritten:
a) Aufbringung einer aus einer Flüssigkeit und Partikeln hergestellten Paste auf einem Substrat,
b) Trocknung der auf dem Substrat aufgebrachten Paste in dampfförmiger Atmosphäre, wobei der Dampf aus der in der Paste verwendeten Flüssigkeit gebildet wird,
c) Sinterung der getrockneten, auf dem Substrat befindlichen Paste,
d) der Dampfdruck wird derart eingestellt, daß bei der während der Trocknung herrschenden Temperatur länger als 10 Minuten pro 10 µm Schichtdicke getrocknet wird.

2. Verfahren nach vorhergehendem Anspruch,
**dadurch gekennzeichnet, daß**
bei Temperaturen getrocknet wird, die mindestens 41 °C unterhalb der Siedetemperatur der Flüssigkeit bei Atmospährendruck liegen.

3. Verfahren nach einem der vorhergehenden Ansprüche,
**dadurch gekennzeichnet, daß**
der Dampfdruck derart eingestellt wird, daß bei der während der Trocknung herrschenden Temperatur länger als 30 Minuten pro 10 µm Schichtdicke getrocknet wird.

4. Verfahren nach einem der vorhergehenden Ansprüche,
**dadurch gekennzeichnet, daß**
Wasser als in der Paste befindliche Flüssigkeit verwendet wird.
